# EUROPÄISCHE PATENTSCHRIFT

(11) **EP 0 641 709 B1**
(45) Veröffentlichungstag und Bekanntmachung des Hinweises auf die Patenterteilung: **10.12.1997**
(21) Anmeldenummer: 94112696.3
(22) Anmeldetag: 13.08.1994
(51) Int. Cl.: B62D 47/02, B60D 5/00

(54) **Drehkranzgelenk für Gelenkomnibusse**
Live ring articulation for articulated busses
Articulation à couronne d'orientation pour autobus articulés

(30) Priorität: 02.09.1993 DE 4329621; 02.09.1993 DE 4329702; 17.09.1993 DE 4331629
(43) Veröffentlichungstag der Anmeldung: 08.03.1995
(73) Patentinhaber: HÜBNER Gummi- und Kunststoff GmbH, D-34123 Kassel (DE)
(72) Erfinder:
(74) Vertreter: Walter, Helmut, Dipl.-Ing.

(56) Entgegenhaltungen:
- EP-A- 0 032 079
- EP-A- 0 340 760

## Beschreibung

Um den im allgemeinen einachsigen Hinterwagen an seinem vorderen Ende auf dem im allgemeinen zweiachsigen Vorderwagen zuverlässig abzustützen und die notwendigen Knickbewegungen, d.h. Relativbewegungen zwischen beiden Teilfahrzeugen um eine vertikale Hochachse zu ermöglichen, sind bei Gelenkomnibussen Vorder- und Hinterwagen im allgemeinen in einem Gelenk, vorzugsweise einem Drehkranzgelenk miteinander verbunden. Ein Drehring des Drehkranzgelenkes ist dem Vorderwagen, ein zweiter Drehring ist dem Hinterwagen zugeordnet und Wälzkörper sind so zwischen den beiden Drehringen angeordnet, daß sich beide Drehringe um die Gelenkhochachse relativ zueinander verstellen können, um Knickbewegungen zwischen den beiden Wagen zuzulassen. Andererseits sind die beiden Drehringe so einander zugeordnet, daß ein Drehring auf dem anderen abgestützt bzw. am anderen aufgehängt ist, um vertikale Abstützkräfte zwischen den beiden Drehringen und damit zwischen den beiden Teilfahrzeugen zu übertragen und der Hinterwagen mit seiner einen Achse oder Achsgruppe an seinem hinteren Bereich im Bereich seines vorderen Endes auf dem hinteren Ende des Vorderwagens aufgesattelt werden kann, der entsprechend im allgemeinen Achsen- bzw. Achsgruppen sowohl an seinem vorderen als auch an seinem hinteren Ende aufweist; der Anschluß zumindest des einen der Drehringe an dem ihm zugehörigen Teilfahrzeug erfolgt in weiteren Gelenken, die Nick- und gegebenenfalls Wankbewegungen zwischen beiden Teilfahrzeugen zulassen.

Diese Drehkranzgelenke sind bisher sehr aufwendige, teuere Baugruppen. Die Ringe sind Gußeisen, an denen Laufflächen für die Wälzkörper bearbeitet werden müssen und denen ihrerseits wieder aufwendige Lagerkonstruktionen für die Zuordnung zum Hinter- bzw. Vorderwagen zugeordnet werden müssen.

So ist durch EP-A-0 340 760 ein Drehkranzgelenk bekannt, bei dem ein Drehring vorhanden ist, der einerseits ein kreisrundes Auge, andererseits einen in der Richtung eines Durchmessers des Auges sich erstreckenden Ausleger aufweist, an dessen dem Auge abgekehrten Ende Anschlüsse vorgesehen sind, mit denen der Drehring am zugehörigen Teilfahrzeug anschließbar ist. Ferner ist aus EP-A-0 032 079 eine Drehgelenkverbindung bekannt, aus der die Verwendung derartiger mit Augen und Ausleger versehener Vorrichtungen in Verbindung mit Gelenkomnibussen und in Gußausführung hervorgeht.

Vor diesem technischen Hintergrund liegt der vorliegenden Erfindung die Aufgabe zugrunde, ein Drehkranzgelenk gemäß dem Gattungsbegriff des Anspruchs 1 so auszubilden, daß weniger Teile als bisher und weniger Bearbeitungsvorgänge notwendig sind.

Die Lösung dieser Aufgabe ergibt sich aus den Merkmalen des Anspruchs 1. Mit den Merkmalen der Unteransprüche wird die Erfindung in zweckmäßiger Weise weiter ausgebildet.

Die Erfindung ist nachfolgend anhand der Zeichnung näher erläutert; in der Zeichnung zeigen
- Fig. 1: Teile eines Drehkranzgelenkes perspektivisch dargestellt, die so ausgebildet sind, daß sie dem Drehkranzgelenk sein erfinderisches Gepräge geben;
- Fig. 2: eine Einzelheit der Anordnung gemäß Fig. 1 in größerer Darstellung;
- Fig. 3: eine Gesamtanordnung, in die die Erfindung integriert ist;
- Fig. 4: einen Schnitt nach der Linie IV-IV in Fig. 5;
- Fig. 5: eine weitere Ausgestaltung der Erfindung in perspektivischer Darstellung und
- Fig. 6: eine Einzelheit der Anordnung in Fig. 3 in größerer Darstellung.

Dem Vorderwagen 1 eines Gelenkomnibusses ist am hinteren Ende ein Querträger 1a zugeordnet. An diesem Querträger 1a ist der eine Drehring 5 eines Drehkranzgelenkes 50 gelagert. Dieser Drehring 5 umschließt ein Auge 3a kreisrund und auf dem gesamten Umfang. Durch den Mittelpunkt 4a dieses Drehringes 5 bzw. des von ihm umschlossenen Auges 3a geht eine vertikale Achse 6, um die dieser Drehring 5 und ein zum Drehring 5 konzentrischer zweiter Drehring 5a relativ zueinander einstellbar sind und die die Knickachse ist, um die sich die beiden Wagen bzw. Teilfahrzeuge des Gelenkfahrzeuges beim Durchfahren von Kurven relativ zueinander einstellen können. Der erwähnte zweite Drehring 5a ist dem vorderen Ende des Hinterwagens 2 in einer Weise zugeordnet, die konventionell sein kann und demzufolge hier nicht näher erläutert werden soll. Wichtig ist lediglich, daß zwischen Hinterwagen 2 und zweitem Drehring 5a keine Relativbewegungen möglich sein sollen. Die Fahrzeuglängsachse 10 schneidet die vertikale Knickachse 6 im Gelenkmittelpunkt 4a und um diese Längsachse 10 können die beiden Wagen relativ zueinander Bewegungen ausführen, die Wankbewegungen sind, weshalb die Fahrzeuglängsachse 10 die Wankachse des Gelenkfahrzeuges ist. Schließlich können beide Wagen relativ zueinander Nickbewegungen um eine Nickachse 9 ausführen, die nahe dem hinteren Ende des Vorderwagens 1 die Wankachse 10 schneidet, so daß der Schnittpunkt A zwischen Nickachse 9 und Wankachse 10 das Nick- und Wankzentrum des Gelenkfahrzeuges ist, dessen Knickzentrum der Gelenkmittelpunkt 4a ist.

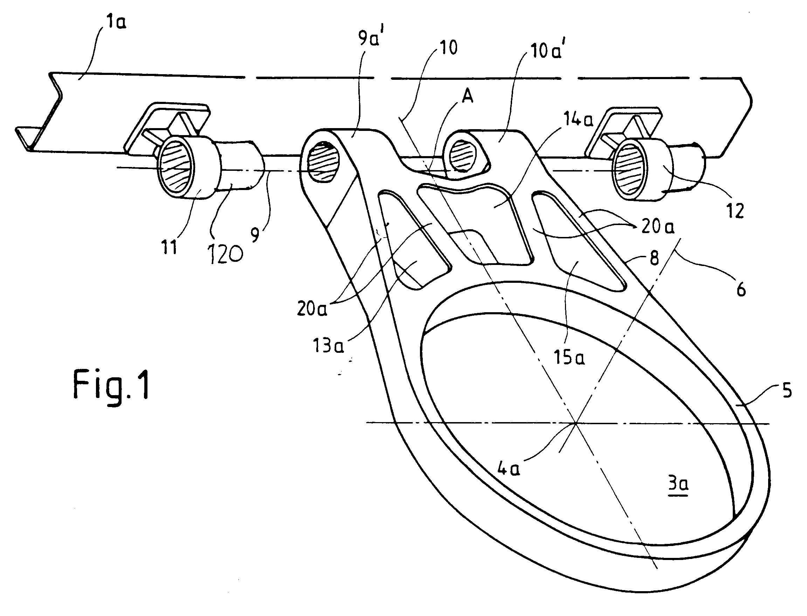

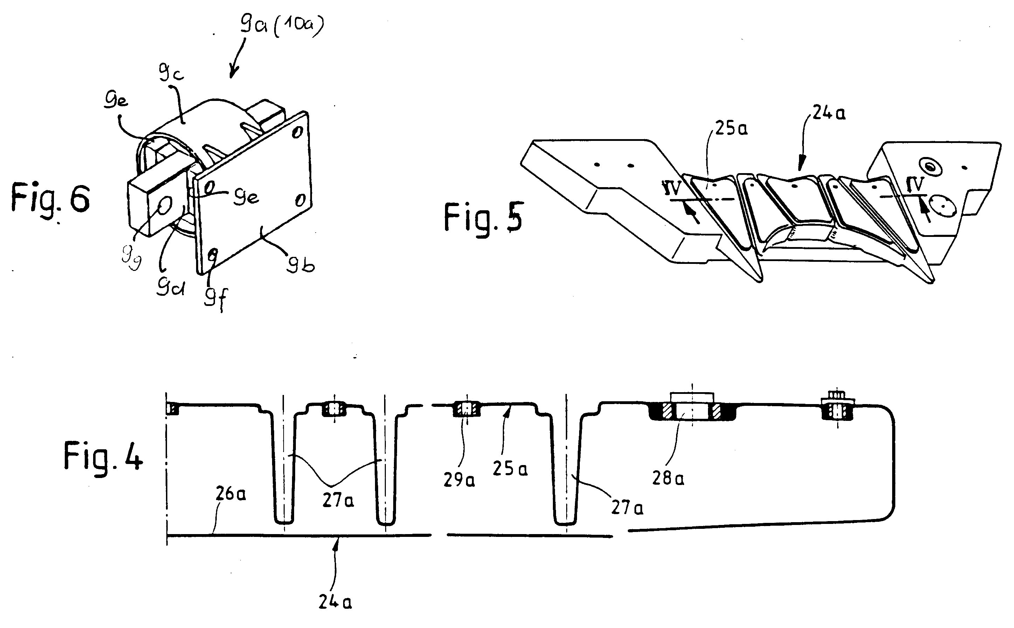

Einstückig mit dem Drehring 5 ist ein Ausleger 8 vorgesehen, der sich symmetrisch zur Wankachse 10 vom Drehring 5 aus in Richtung auf den Querträger 1a erstreckt. Drehring 5 und Ausleger 8 sind ein einstückiges Gußteil. An dem dem Drehring 5 abgekehrten, bei Berücksichtigung der Hauptfahrtrichtung 3 vorderen Ende, sind dem Ausleger 8 symmetrisch zur Wankachse 10 Zwei Lager 9a, 10a zum Anschluß an den Träger 1a zugeordnet. Beide Lager 9a, 10a sind gleich, eines von ihnen, das Lager 9a ist in Fig. 6 in größerer perspektivischer Widergabe dargestellt. Eine Platte 9b mit der äußeren Lagerbüchse 9c ist an dem Träger 1a angeschraubt (Schraubenlöcher 9f). Ein konzentrisch in der Lagerbüchse 9c angeordneter Zapfen 9d ist an beiden Enden seitlich von der Lagerbüchse 9c am Ausleger 8 (Schraubenloch 9g) befestigt. Zwischen Lagerbüchse 9c und Zapfen 9d sind Gummielemente 9e angeordnet, die ein Schrägstellen dem Zapfens 9d gegenüber der Hülse 9c gestatten, wenn zwischen beiden Teilfahrzeugen Wankbewegungen um die Achse 10 auftreten, die ein Drehen des Zapfens 9d gegenüber der Hülse 9c gestatten, wenn zwischen beiden Teilfahrzeugen Knickbewegungen um die Achse 9 auftreten und die bei der Übertragung von Längskräften zwischen den beiden Teilfahrzeugen in relativ geringem Maße druckverformt werden. Damit sind solche Lager hochwirksam aber aufwendig und demzufolge teuer. Eine einfachere Lösung wird deswegen weiter unten im Zusammenhang mit Fig. 1 erläutert, die zwei seitliche Lager 11, 12 und eine Drehstabfeder 120 verwendet. In jedem Fall sind durch die Zuordnung beider Drehringe zu den Wagen bzw. Teilfahrzeugen des Gelenkfahrzeuges und zueinander sowie die Anordnung der Gelenke im Bereich des Querträgers 1a Knick-, Wank- und Nickbewegungen zwischen Vorder- und Hinterwagen möglich und werden zwischen beiden Wagen Längskräfte, also vor allem Brems- und Antriebskräfte, übertragen.

Der Ausleger 8 weist nun zur Gewichtsersparnis ohne Verlust an Eigensteifigkeit symmetrisch zur Wankachse 10 Aussparungen 13a, 14a, 15a auf, die durch in Längsrichtung des Auslegers verlaufende Stege 20a voneinander getrennt sind. "Gewichtsersparnis" soll heißen, daß die Einheit aus Drehring 5 und Ausleger 8 selbst ein relativ geringes Gewicht haben soll, also ein Gußteil mit relativ geringem Eigengewicht gegeben ist.

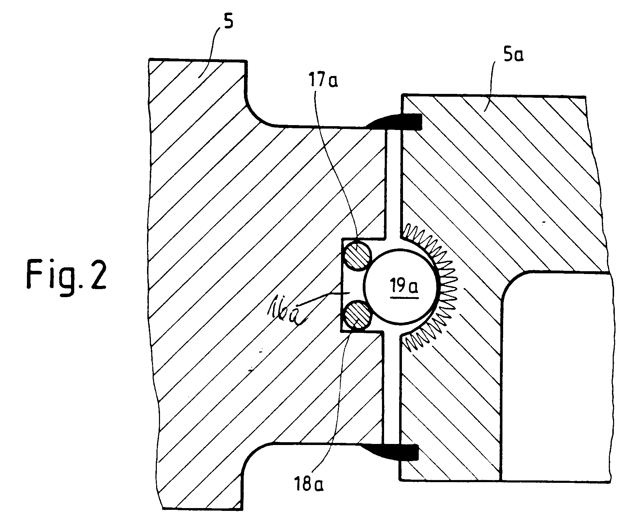

Soll nun das Drehgelenk in üblicher Weise als Wälzlagergelenk ausgebildet sein, so kann beim Gießen der Einheit aus Drehring 5 und Ausleger 8 in der Innenwand des Drehringes 5 eine Ringnut 16a vorgesehen werden, in die später zwei Ringe 17a, 18a aus gehärtetem Edelstahl eingelegt werden, so daß sich an ihnen beispielsweise die als Kugeln 19a ausgebildeten Wälzkörper abstützen, deren abstützende Gegenfläche Teil des zweiten Drehringes 5a ist. Der Edelstahldraht hat vorzugweise einen kreisrunden Querschnitt (Fig. 2).

Die Wälzkörper 19a sind so in der Ringnut 16 gehalten und so dem zweiten Drehring des Kugeldrehkranzgelenks zugeordnet, daß Ober- und Unterseite des Drehkranzgelenkes gegeneinander vertauscht werden können, d.h. jeder der beiden Drehringe in einem Einbauzustand oberer, im anderen Einbauzustand unterer Drehring sein kann und der obere Drehring auf dem unteren Drehring abgestützt, der untere Drehring aber auch am oberen Drehring aufgehängt sein kann.

Schließlich ist es möglich, auf die Wälzkörper 19a zu verzichten und das Lager als Gleitlager auszubilden, um durch Ausbildung der Gleitlagerflächen die gewollte Eigendämpfung des Lagers bezüglich der relativen Drehbewegung zwischen beiden Drehringen zu bewirken.

Wie bereits erwähnt macht es die bisher beschriebene Lösung möglich, den Drehring 5 mit dem zugehörigen Ausleger 8 als Gußteil mit geringem Gewicht herzustellen, das entsprechend preiswert sein kann.

Andererseits soll nun aber das eingebaute Drehkranzgelenk ein nicht zu geringes Eigengewicht haben, um beim Fahrzeuglauf in Grenzen einen Stabilisierungseffekt zu ergeben.

Um das zu erreichen, wird mit einer weiteren Ausgestaltung der Erfindung vorgeschlagen, die Öffnungen zu verschließen und zwar mit einem Material, das von dem des Gußkörpers verschieden ist.

Als eine besondere Ausbildung wird vorgeschlagen, Einsätze als Behälter aus einem Polyamid auszubilden, die mit einem praktisch sich nicht verbrauchenden Funktionsfluid gefüllt sind. In Frage kommt beispielsweise Öl für Hydraulikbremsen, Stabilisierungseinrichtungen für das Drehgelenk oder dergleichen. Eine solche Lösung wird nachfolgend anhand von Fig. 4, 5 erläutert.

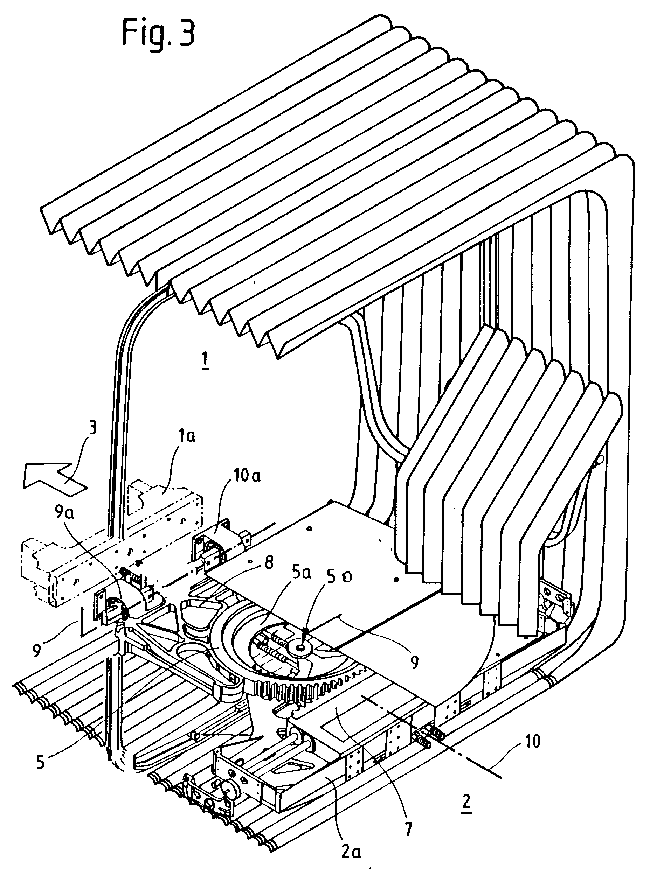

Im einfachsten Fall sind in die Öffnungen 13a, 14a und 15a Behälter aus einem Polyamid eingesetzt und dort durch geeignete Mittel fixiert. Der Fixierung kann beispielsweise ein Klebstoff dienen, oder es werden Schraubenbolzen oder dergleichen verwendet. Die solcherart eingebauten Behälter werden bzw. sind mit einem Funktionsfluid gefüllt, das beispielsweise das Betriebsöl für Hydraulikbremsen sein kann. Es soll sich auf jeden Fall um ein Betriebsfluid handeln, das sich auch in längerer Betriebszeit nicht verbraucht, um über lange Zeit einen gleichmäßigen Einfluß auf das Fahrverhalten des Gesamtfahrzeuges zu haben. Vorzugsweise handelt es sich um das Betriebsfluid einer Dämpfungs- und/oder Steuereinrichtung, die hydraulisch arbeitet und der Dämpfung bzw. Steuerung der Relativbewegungen zwischen den Drehringen eines Drehkranzgelenks dient, von denen einer der in dem Auge 5 aufgenommene Drehring bzw. in der vorbeschriebenen Weise in das Auge 5 integriert ist (Fig. 2), womit die Knickbewegungen um eine durch das Zentrum 4a des Gelenks gehende Hochachse 6 zwischen den beiden Teilfahrzeugen, deren Verbindung das Drehkranzgelenk dient, möglich sind. Es handelt sich bei einer Anordnung, wie sie in Fig. 3 dargestellt ist, um die hydraulische Dämpfungs- bzw. Steuereinrichtung 7.

Gemäß Fig. 4, 5 sind die Fluidbehälter Kammern eines einzigen Fluidbehälters 24a, der so konstruiert ist, daß er in seiner Gesamtheit dem Ausleger 8 mit Freiräumen zwischen den Stegen 20a zugeordnet werden kann. Die Oberseite 25a dieses Behälters 24a liegt in der Ebene der Oberseite des Auslegers 8, die Unterseite 26a des Behälters 24a liegt in der Ebene der Unterseite des Auslegers 8 und die Oberseite 25a des Behälters 24a bildet auf die Unterseite 26a des Behälters 24a hin gerichtete Kanäle 27a, die in Querschnitt und Anordnung den Rippen 20a des Auslegers 8 entsprechen, so daß im Einbauzustand diese Rippen 20a in den Kanälen 27a liegen.

Dieser Behälter weist im Bereich der Oberseite 25a Einlaßöffnungen 28a für das Einfüllen des Fluids sowie Entlüftungsöffnungen 29a auf, die geöffnet sind, wenn das Fluid eingefüllt und wie die Einfüllöffnungen 28a nach dem Einfüllen des Fluids verschlossen sind, so daß sich das Fluid in einem allseits geschlossenen, dem Ausleger 8 zugeordneten Behälter 24a befindet, wobei der Behälterinnenraum durch geeignete Verbindungen mit dem Bedarfsmittel für das Fluid verbunden ist, bei dem es sich insbesondere um ein Gelenkdämpfungs- und Steuermittel nach der Patentanmeldung EP 92106729.4 (0 514 672) handelt, so daß die Erfindung auch im Zusammenhang mit dieser Patentanmeldung zu sehen ist.

Ersichtlich füllt der Einsatz die Gesamtheit der Aussparungen 13a, 14a, 15a vollständig aus, was sich insbesondere an den in Durchmesserrichtung einander gegenüberliegenden Seiten des Einsatzes auswirkt, dessen dem Auge 5 zugekehrte Wand die Kontur eines Kreisbogens gleichen Radius hat.

Bei der vorbeschriebenen Lösung einschließlich ihrer weiteren Ausgestaltung ist die Knickachse, um die beide Teilfahrzeuge relativ zueinander Bewegungen in einer Horizontalebene durchführen können, um durch Kurven fahren zu können, die lotrechte Gelenkachse 6. Um diese vertikale Gelenkhochachse 6 können sich die beiden Drehringe 5, 5a des Drehkranzgelenkes 5b relativ zueinander drehen und da je einer dieser beiden Drehringe einem der beiden Teilfahrzeuge zugeordnet ist, können die Teilfahrzeuge Knickbewegungen relativ zueinander durchführen. Alle anderen notwendigen Relativbewegungen zwischen beiden Teilfahrzeugen werden durch den elastischen Anschluß des Auslegers 8 am Teilfahrzeug 1 ermöglicht, womit einer der beiden Drehringe am einen der beiden Teilfahrzeuge elastisch angeschlossen ist. Dieser eine Drehring ist an einem Ende des Auslegers 8 befestigt, dessen anderes Ende über entsprechende Federungen an einem der beiden Teilfahrzeuge gehalten ist. Bei den anderen notwendigen Relativbewegungen handelt es sich vor allem um Nickbewegungen, die beide Teilfahrzeuge relativ zueinander um die horizontale Querachse 9 ausführen können, um Fahrbahnquerwellen überqueren zu können. Gegebenenfalls handelt es sich bei den anderen Relativbewegungen um Wankbewegungen, die die beiden Teilfahrzeuge relativ zueinander um die Fahrzeuglängsachse 10 ausführen können, um einseitige Fahrbahnerhöhungen überfahren zu können. Da es sich insbesondere in der Summe der Einzelbewegungen um sehr komplizierte Bewegungen handelt, wurden sehr komplizierte Federungen entwikkelt, um das Gelenk im Bereich der Lager 9a, 10a elastisch bewegbar an einem der beiden Fahrzeugglieder anzuschließen, gleichzeitig aber Brems- und Antriebskräfte durch das Gelenk hindurch zwischen den beiden Teilfahrzeugen spielarm übertragen zu können. Da die Federungen bei entsprechenden Komfortanforderungen sehr kompliziert sind, sind die elastischen Gelenkanschlüsse sehr teuer. Ein Beispiel für eine solche Lösung zeigt Fig. 6.

Aufgabe der weiteren Ausgestaltung der Erfindung ist eine Entfeinerung des elastischen Gelenkanschlusses im Bereich der Lager 9a, 10a derart, daß unter Wahrung eines unabdingbaren Mindestkomfort der elastische Gelenkanschluß wesentlich billiger als bisher ausgeführt wird.

Im Ergebnis läuft diese weitere Ausgestaltung der Erfindung auf die Anwendung eines an sich bekannten Federstabes hinaus, der preisgünstig herzustellen ist, auch wenn er noch einen relativ guten Komfort gewährleisten soll (Fig. 1).

Das erfindungsgemäße Gußteil weist widerum das Lagerauge 5 und den Ausleger 8 auf; Lagerauge und Ausleger sind einstückig gegossen. Das Lagerauge 5 umschließt das Gelenkzentrum 4a, in dem sich die Hoch- oder Knickachse 6 und die Längs- oder Wankachse 10 des Gelenkfahrzeuges schneiden. Der Ausleger 8 ist mit seinem dem Lagerauge 5 abgewandten Ende am Teilfahrzeug 1 (Fig. 3) mit den Lageraugen 9a', 10a' (Fig. 1) versehen, die in symmetrischer Anordnung zu beiden Seiten der Fahrzeuglängs- bzw. Knickachse 10 sich befinden. Am hinteren Ende des Teilfahrzeugs 1 ist der Untergestellquerträger 1a angeordnet. An diesem Querträger 1a sind seitlich vom Ausleger 8 achsgleich mit dessen Lageraugen 9a', 10a' und symmetrisch zur Längs- bzw. Wankachse 10 die beiden Lageraugen 11, 12 befestigt. Durch die Lageraugen 9a', 10a', 11, 12 ist rotationssymmetrisch zur Nickachse 9 ein Federstab 120 geführt, der der Einfachheit halber mit kreisrundem Querschnitt dargestellt ist, vorzugsweise aber ein Federblatt mit rechteckigem Querschnitt ist, das horizontal angeordnet ist, so daß seine längeren Querschnittskanten in Fahrzeuglängsrichtung verlaufen. Auf dem Federstab ist der Ausleger 8 mit seinen Lageraugen 9a', 10a' befestigt und der Federstab ist an seinen Enden innerhalb der Lageraugen 11, 12 befestigt, wobei die Befestigung im einen der beiden Lageraugen 11, 12 Längsverschiebungen des Federstabendes gegenüber dem Lagerauge zulassen sollte. Ist der Federstab, wie vorher erwähnt, ein Stab mit kreisrundem Querschnitt, so muß der Querschnitt so dimensioniert werden, daß er Nickbewegungen um die Achse 9 und Wankbewegungen um die Achse 10 zwischen beiden Teilfahrzeugen in ausreichendem Maße zuläßt, trotzdem aber Brems- und Antriebskräfte zwischen beiden Teilfahrzeugen in Richtung der Achse 10 ohne unzulässig viel Spiel übertragen werden. Diesen Forderungen ist besser Rechnung zu tragen, wenn der Federstab den Querschnitt eines liegenden Rechtecks hat, weil er relativ Liege- und verwindungsweich ist, in Richtung der Längsachse 10 aber relativ biegesteif ist.

Die dargestellte und beschriebene Anordnung kann in der Weise abgewandelt werden, daß der Federstab 120 in seiner Mitte am Querträger 1a gehalten und auf seinen Enden der Ausleger 8 befestigt ist, wobei im Zusammenhang mit "Lagerung" und "Befestigung" von Querträger 1a Ausleger und Federstab 120 stets und primär an eine drehfeste Verbindung gedacht ist.

## Patentansprüche

1. Drehkranzgelenk für Gelenkomnibusse mit einem Drehring, der einerseits ein kreisrundes Auge (3a), andererseits einen in der Richtung eines Durchmessers des Auges sich erstreckenden Ausleger (8) aufweist, an dessen dem Auge abgekehrten Ende Anschlüsse (9a,10a) vorgesehen sind, mit denen der Drehring am zugehörigen Teilfahrzeug anschließbar ist, **dadurch gekennzeichnet, daß** der Drehring ein einstückiges Gußteil (5,8) mit mehreren Öffnungen ist derart, daß eine dieser Öffnungen das Auge und derart ausgebildet ist, daß ohne Nacharbeit die Wälzkörper (19a) eines Wälzlagers (17a,18a,19a) sich an der dem Auge (3a) umschließenden Wand des Drehringes (5) abstützen können und zwar über in dem Auge eingelegte Lagermittel (17a,18a), die parallel zueinander verlaufende Edelstahlringe (17a,18a) mit kreisrundem Querschnitt sind, wobei die das Auge umschließende Wand Teil eines Gleitlagers mit gezielter Reib- bzw. Dämpfungswirkung ist, während die anderen Öffnungen (13a,14a,15a) im Ausleger (8) sich befinden und durch etwa in Längsrichtung des Auslegers verlaufende Stege voneinander getrennt sind und am dem Auge (3a) abgekehrten Ende die Anschlüsse in der Form von Lageraugen bzw. Lagerhülsen angeordnet sind.

2. Drehkranzgelenk nach Anspruch 1, **dadurch gekennzeichnet, daß** die Edelstahlringe zwei voneinander beabstandet verlaufende Edelstahldrahtringe sind.

3. Drehkranzgelenk nach Anspruch 1, **gekennzeichnet durch** Einsätze in den Öffnungen (13a,14a,15a) des Auslegers aus einem anderen Material als dem des Drehringes einschließlich Ausleger (5,8).

4. Drehkranzgelenk nach Anspruch 3, **dadurch gekennzeichnet, daß** die Einsätze Behälter für Funktionsfluid sind.

5. Drehkranzgelenk nach Anspruch 3 oder 4, **dadurch gekennzeichnet, daß** das Material der Einsätze ein Polyamid ist.

6. Drehkranzgelenk nach einem der Ansprüche 3 bis 5, **dadurch gekennzeichnet, daß** die Einsätze in mehreren Öffnungen (13a,14a,15a) des Auslegers (8) eine Einheit bilden, die Aufnahmeöffnungen (27a) für Rippen (20a) bilden, durch die die Öffnungen voneinander getrennt sind.

7. Drehkranzgelenk nach einem der Ansprüche 3 bis 6, **dadurch gekennzeichnet, daß** die Einsätze eine Höhe haben, die der Dicke des Auslegers (8) entspricht.

8. Drehkranzgelenk nach Anspruch 6 oder 7, **dadurch gekennzeichnet, daß** die Aufnahmeöffnungen die Form von Kanälen (27a) haben, die von der Oberseite der eine Einheit (24a) bildenden Einsätze bis nahe an die Unterseite der Einheit heranreichen.

9. Drehkranzgelenk nach den Ansprüchen 6 bis 8, **dadurch gekennzeichnet, daß** die zu einer Einheit (24a) zusammengefaßten Einsätze zumindest eine Einlaßöffnung für ein Funktionsfluid und Entlüftungsöffnungen (29a) aufweisen, wobei Einlaß- und Entlüftungsöffnungen nach dem Einfüllen des Fluids verschließbar sind.

10. Drehkranzgelenk nach den Ansprüchen 4 bis 9, **gekennzeichnet durch** die Verwendung des hydraulischen Fluids als eine Einrichtung (7) zum Dämpfen bzw. Steuern der Relativbewegungen zwischen zwei Drehringen (5,5a) eines Drehkranzgelenkes für Gelenkomnibusse.

11. Drehkranzgelenk nach einem der Ansprüche 1 bis 10, **gekennzeichnet durch** eine elastische Verbindung zwischen einem zugehörigen Teilfahrzeug (1) eines Gelenkomnibusses und dem Ausleger (8) des Gußteils (5,8).

12. Drehkranzgelenk nach Anspruch 11, **dadurch gekennzeichnet, daß** die elastische Verbindung einen Federstab (120) einschließt, dessen beiden Enden an dem Teilfahrzeug befestigt sind und auf dein zwischen den beiden Enden der Ausleger (8) befestigt ist.

13. Drehkranzgelenk nach Anspruch 12, **gekennzeichnet durch** eine Veränderung der Befestigung des Federstabes (120) derart, daß die Enden des Federstabes an dem Ausleger (8) befestigt sind und der Federstab zwischen seinen Enden an einem der beiden Teilfahrzeuge befestigt ist.

14. Drehkranzgelenk nach Anspruch 12 oder 13, **gekennzeichnet durch** einen runden Querschnitt des Federstabes.

15. Drehkranzgelenk nach Anspruch 14, **gekennzeichnet durch** einen kreisrunden Querschnitt des Federstabes (120).

16. Drehkranzgelenk nach Anspruch 12 oder 13, **gekennzeichnet durch** einen Rechteckquerschnitt des Federstabes (120).

17. Drehkranzgelenk nach einem der Ansprüche 12 und 13, **dadurch gekennzeichnet, daß** der Federstab (120) an einem der beiden Teilfahrzeuge gemäß Anspruch 18 bzw. am Konsol gemäß Anspruch 19 in Längsrichtung des Federstabes verschiebbar befestigt ist.

18. Drehkranzgelenk nach Anspruch 16, **dadurch gekennzeichnet, daß** die längeren Seiten des Rechteckquerschnitts horizontal liegen.

19. Drehkranzgelenk nach Anspruch 11, **dadurch gekennzeichnet, daß** die elastische Verbindung Gummihülsen sind, die zwischen dem Ausleger und zugehörigem Teilfahrzeug so angeordnet und so ausgebildet sind, daß sie Nickbewegungen zwischen beiden Teilfahrzeugen durch Torsionsverformung, Wankbewegungen zwischen beiden Teilfahrzeugen durch einander entgegengerichteten Druck-/Zugverformungen an beiden Enden und Längskräfteübertragung durch Druck-/Zugverformungen in in Fahrzeuglängsrichtung einander gegenüberliegenden Bereichen zulassen.

20. Verwendung eines Drehkranzgelenks nach einem der Ansprüche 1 bis 19 für einen Gelenkomnibus mit einem gelenkig an den zwei- oder mehrachsigen Vorderwagen des Gelenkomnibusses anschließbaren ersten Drehring, auf dem sich ein starr dem Hinterwagen des Gelenkomnibusses zugeordneter zweiter Drehring abstützt bzw. an dem ein starr dem Hinterwagen des Gelenkomnibusses zugeordneter zweiter Drehring aufgehängt ist, wobei der Hinterwagen lediglich an seinem dem Gelenk abgekehrten Ende eine Achse bzw. Achsgruppe aufweist und die Stützlast des Aufliegers am Ende des Gelenkes mittels des Gelenkes auf den Vorderwagen übertragen wird.

## Claims

1. A turntable articulation for articulated buses, comprising a turntable ring which, on the one hand, has a circular eye (3a), and, on the other hand, an arm (8) extending in the direction of a diameter of the eye, connections (9a, 10a) by means of which the turntable ring can be connected to the associated component vehicle being provided at the arm end remote from the eye, characterised in that the turntable ring is a one-piece casting (5, 8) having a plurality of openings such that one of said openings forms the eye and is so devised that the rolling members (19a) of a rolling bearing (17a, 18a, 19a) can, without any finishing operation, bear against the wall of the turntable ring (5) enclosing the eye (3a), namely by way of bearing means (17a, 18a) which are inserted in the eye and which are parallel special steel rings (17a, 18a) of circular cross-section, while the wall enclosing the eye is part of a plain bearing having specific frictional or damping action, whereas the other openings (13a, 14a, 15a) are situated in the arm (8) and are separated from one another by webs extending substantially in the longitudinal direction of the arm and the connections are disposed in the form of bearing eyes or bearing bushes at the end remote from the eye (3a).

2. A turntable articulation according to claim 1, characterised in that the special steel rings are two spaced-apart special steel wire rings.

3. A turntable articulation according to claim 1, characterised by inserts in the openings (13a, 14a, 15a) of the arm made from a different material than the material of the turntable ring including the arm (5, 8).

4. A turntable articulation according to claim 3, characterised in that the inserts are containers for operating fluid.

5. A turntable articulation according to claim 3 or 4, characterised in that the material of the inserts is a polyamide.

6. A turntable articulation according to any one of claims 3 to 5, characterised in that the inserts in a plurality of openings (13a, 14a, 15a) of the arm (8) form a unit which form reception openings (27a) for ribs (20a) by means of which the openings are separated from one another.

7. A turntable articulation according to any one of claims 3 to 6, characterised in that the inserts have a height corresponding to the thickness of the arm (8).

8. A turntable articulation according to claim 6 or 7, characterised in that the reception openings have the form of channels (27a) which extend from the top of the inserts forming a unit (24a) to near the underside of the unit.

9. A turntable articulation according to any one of claims 6 to 8, characterised in that the inserts combined to form a unit (24a) have at least one inlet opening for an operating fluid and venting openings (29a), the inlet and venting openings being closable after the introduction of the fluid.

10. A turntable articulation according to any one of claims 4 to 9, characterised by the use of the hydraulic fluid as a means (7) for damping or controlling the relative movements between two turntable rings (5, 5a) of a turntable articulation for articulated buses.

11. A turntable articulation according to any one of claims 1 to 10, characterised by an elastic connection between an associated component vehicle (1) of an articulated bus and the arm (8) of the casting (5, 8).

12. A turntable articulation according to claim 11, characterised in that the elastic connection includes a spring rod (120), the two ends of which are fixed on the component vehicle and on which the arm (8) is fixed between the two ends.

13. A turntable articulation according to claim 12, characterised by a change in the fixing of the spring rod (120) such that the ends of the spring rod are fixed on the arm (8) and the spring rod is fixed on one of the two component vehicles between its ends.

14. A turntable articulation according to claim 12 or 13, characterised by a round cross-section of the spring rod.

15. A turntable articulation according to claim 14, characterised by a circular cross-section of the spring rod (120).

16. A turntable articulation according to claim 12 or 13, characterised by a rectangular cross-section of the spring rod (120).

17. A turntable articulation according to claim 12 or 13, characterised in that the spring rod (120) is fixed on one of the two component vehicles according to claim 18 or on the bracket according to claim 19 so as to be displaceable in the longitudinal direction of the spring rod.

18. A turntable articulation according to claim 16, characterised in that the longer sides of the rectangular cross-section are horizontal.

19. A turntable articulation according to claim 11, characterised in that the elastic connection is in the form of rubber bushes so disposed between the arm and the associated component vehicle and so constructed that they allow pitch movements between the two component vehicles by torsional deformation, rolling movements between the two component vehicles by contra-directional compressive/tensile deformations at the two ends and longitudinal force transmission by compressive/tensile deformations in zones situated opposite one another in the longitudinal direction of the vehicle.

20. Use of a turntable articulation according to any one of claims 1 to 19 for an articulated bus having a first turntable ring which can be connected articulatedly to the two-axle or multi-axle front vehicle of the articulated bus and on which a second turntable ring rigidly associated with the rear vehicle of the articulated bus bears, or on which a second turntable ring rigidly associated with the rear vehicle of the articulated bus is suspended, wherein the rear vehicle has an axle or axle assembly only at its end remote from the articulation and the supported load of the semitrailer at the end of the articulation is transmitted by the latter to the front vehicle.

## Revendications

1. Articulation à couronne d'orientation pour autobus articulés avec une couronne qui comprend d'une part un oeil circulaire (3a) et d'autre part une console (8) s'étendant suivant un axe de l'oeil et munie à son extrémité ne regardant pas l'oeil d'organes (9a,10a) pour l'assemblage de la couronne avec le véhicule concerné, **caractérisée par le fait** que la couronne est faite d'une seule pièce en fonte (5,8) avec plusieurs ouvertures dont l'une est l'oeil conçu de sorte que, sans retouche, les pièces de roulement (19a) d'un roulement (17a,18a,19a) peuvent s'appuyer contre la paroi de la couronne (5) entourant l'oeil (3a), par l'intermédiaire d'éléments (17a,18a) soit des anneaux (17a,18a) en acier fin parallèles et à section circulaire, la paroi qui enveloppe l'oeil faisant partie d'un palier lisse à effets déterminés de frottement ou d'amortissement, tandis que les autres ouvertures (13a,14a,15a) étant pratiquées dans la console (8) et séparées entre elles par des entretoises orientées à peu près en sens longitudinal de la console et que les organes d'assemblage à l'extrémité ne regardant pas l'oeil (3a) étant conçus en forme de coussinets borgnes ou débouchants.

2. Articulation à couronne d'orientation suivant la revendication 1, **caractérisée par le fait** que les anneaux en acier fin sont des fils d'acier fin disposés à distance.

3. Articulation à couronne d'orientation suivant la revendication 1, **caractérisée par** des fourrures appliquées dans les ouvertures (13a,14a,15a) de la console et faites dans un matériau autre que celui de la couronne et de la console (5,8).

4. Articulation à couronne d'orientation suivant la revendication 3, **caractérisée par le fait** que les fourrures sont des récipients pour un fluide opérateur.

5. Articulation à couronne d'orientation suivant la revendication 3 ou 4, **caractérisée par le fait** que le matériau des fourrures est un polyamide.

6. Articulation à couronne d'orientation suivant l'une des revendications 3 à 5, **caractérisée par le fait** que les fourrures appliquées dans plusieurs ouvertures (13a,14a,15a) de la console (8) forment une unité qui comporte des creux (27a) pour des nervures (20a) qui séparent les ouvertures entre elles.

7. Articulation à couronne d'orientation suivant l'une des revendications 3 à 6, **caractérisée par le fait** que les fourrures ont une hauteur correspondant à l'épaisseur de la console (8).

8. Articulation à couronne d'orientation suivant l'une des revendications 6 ou 7, **caractérisée par le fait** que les creux ont la forme de gorges (27a) qui descendent depuis la surface des fourrures formant une unité (24a) jusqu'à proximité du fond de l'unité.

9. Articulation à couronne d'orientation suivant les revendications 6 à 8, **caractérisée par le fait** que les fourrures constituant une unité (24a) ont au moins un orifice de remplissage pour un fluide opérateur et des orifices d'échappement (29a), tous ces orifices pouvant être fermés après le remplissage du fluide.

10. Articulation à couronne d'orientation suivant les revendications 4 à 9, **caractérisée par** l'utilisation du fluide hydraulique comme un moyen (7) pour amortir ou régler les mouvements relatifs entre deux couronnes (5,5a) d'une articulation à couronne d'orientation pour autobus articulés.

11. Articulation à couronne d'orientation suivant l'une des revendications 1 à 10, **caractérisée par** un assemblage élastique entre un élément d'autobus articulé (1) et la console (8) de la pièce en fonte (5,8).

12. Articulation à couronne d'orientation suivant la revendication 11, **caractérisée par le fait** que l'assemblage élastique comprend une barre élastique (120) dont les deux bouts sont fixés à l'élément d'autobus et entre lesquels est fixée la console (8).

13. Articulation à couronne d'orientation suivant la revendications 12, **caractérisée par** une modification de la fixation de la barre élastique (120) en ce sens que les bouts de la barre élastique sont fixés à la console (8) et que la partie de la barre élastique entre ces deux bouts est fixée à l'un des deux éléments d'autobus.

14. Articulation à couronne d'orientation suivant la revendication 12 ou 13, **caractérisée par** une section ronde de la barre élastique (120).

15. Articulation à couronne d'orientation suivant la revendication 14, **caractérisée par** une section rigoureusement circulaire de la barre élastique (120).

16. Articulation à couronne d'orientation suivant la revendication 12 ou 13, **caractérisée par** une section rectangulaire de la barre élastique (120).

17. Articulation à couronne d'orientation suivant l'une des revendications 12 et 13, **caractérisée par la fait** que la barre élastique (120) est fixée à l'un des éléments d'autobus, suivant la revendication 18 ou, à la console, suivant la revendication 19 de façon à pouvoir se déplacer suivant son axe longitudinal.

18. Articulation à couronne d'orientation suivant la revendication 16, **caractérisée par le fait** que les arêtes en long de la section rectangulaire se trouvent à l'horizontale.

19. Articulation à couronne d'orientation suivant la revendication 11, **caractérisée par le fait** que l'assemblage élastique est réalisé par des manchons en caoutchouc disposés entre la console et l'élément d'autobus concerné et conçus de sorte qu'ils admettent des tangages entre les deux éléments d'autobus par torsion, des roulis entre les deux éléments par des déformations opposées par pression/traction au niveau des deux extrémités, et la transmission de forces en long par des déformations par pression/traction dans des zones opposées le long du véhicule.

20. Utilisation d'une articulation à couronne d'orientation suivant l'une des revendications 1 à 19 pour un autobus articulé avec une couronne articulée sur l'élément avant à deux ou plusieurs essieux de l'autobus articulé, sur laquelle s'appuie une deuxième couronne assemblée fixe avec l'élément arrière dudit autobus, ou à laquelle est suspendue une deuxième couronne assemblée fixe avec ledit élément arrière de l'autobus, l'élément arrière ayant seulement au bout ne regardant pas l'articulation un axe ou un ensemble d'axes, et la charge de l'élément arrière pesant sur le bout de l'articulation étant transmise par l'articulation à l'élément avant.
